# EUROPEAN PATENT APPLICATION

(11) **EP 2 667 386 A1**
(43) Date of publication of application: **27.11.2013**
(21) Application number: 12736784.5
(22) Date of filing: 19.01.2012
(51) Int. Cl.: H01F 1/08, H01F 1/053, H02K 15/03

(54) **BONDED MAGNET AND MOTOR PROVIDED WITH SAME**

(30) Priority: 20.01.2011 JP 2011009637
(71) Applicant: Panasonic Corporation, Osaka 571-8501 (JP)
(72) Inventor: TSUTSUMI, Shin'ichi, Osaka 540-6207 (JP)
(74) Representative: Schwabe - Sandmair - Marx
(86) International application number: PCT/JP2012/000293
(87) International publication number: WO 2012/098883

(57) **Abstract**

A bonded magnet of the present invention has a configuration that it contains at least a magnetic powder and a binder, and in which the magnetic powder and the binder are mixed such that a content of the magnetic powder is 98 mass% or more and a content of the binder is more than 0 mass% and 2 mass% or less. Accordingly, a bonded magnet having good magnetic characteristics and high heat resistance can be attained.

## Description

### TECHNICAL FIELD

The present invention relates to a bonded magnet having high heat resistance and a motor provided with the same.

### BACKGROUND ART

Conventionally, a bonded magnet of this kind is described, for example, in PTL 1.

Hereinafter, a method of producing a bonded magnet described in PTL 1 will be explained.

First, a rare-earth magnetic powder which has been ground into a predetermined particle diameter is mixed with a binder. Then, the mixture of the rare-earth magnetic powder and the binder is compression-molded into a predetermined shape. Accordingly, a bonded magnet is produced.

In this case, the binder is made by mixing a thermosetting resin with a thermoplastic resin having a higher melting temperature, for example, 10°C to 20°C higher, than the curing temperature of the thermosetting resin.

The rare-earth magnetic powder is mixed with the thermosetting resin and the thermoplastic resin constituting the binder such that the mixing ratio of the rare-earth magnetic powder ranges from 80 mass% to 96 mass%, the mixing ratio of the thermosetting resin ranges from 2 mass% to 15 mass%, and the mixing ratio of the thermoplastic resin is 5 mass% or less (provided that 0 is excluded).

This makes it possible to enhance heat resistance and improve dimensional accuracy of the bonded magnet. It is to be noted that the heat resistance refers to resistance against deterioration in magnetic force by heat.

However, for example, in the case of a motor provided in the vicinity of an engine room of an automobile, the motor is required to have heat resistance close to 150°C because heat generated by the engine and heat generated by the motor itself are generally added to the motor. Therefore, there has been demanded further improvement on heat resistance for a bonded magnet used in a motor.

As to the residual magnetic flux density of the conventional bonded magnet disclosed in PTL 1, since the bonded magnet contains a binder in an amount of at least 4 mass%, there is a problem that its magnetic force is decreased about 25% compared with the magnetic force of a 100% rare-earth magnetic powder, provided that the true density without voids is employed with the specific gravity of the binder being 1 and the specific gravity of the rare-earth magnetic powder being 7.6.

### Citation List

### Patent Literature

PTL 1: Unexamined Japanese Patent Publication No. 2010-114333

### SUMMARY OF THE INVENTION

A bonded magnet of the present invention has a configuration that it contains at least a magnetic powder and a binder, and in which the magnetic powder and the binder are mixed such that a content of the magnetic powder is 98 mass% or more and a content of the binder is more than 0 mass% and 2 mass% or less. Accordingly, a bonded magnet having good magnetic characteristics and high heat resistance can be attained.

A motor of the present invention has a rotor or stator provided with the bonded magnet having the above configuration. Accordingly, a motor having a small deterioration in characteristics even at high temperatures can be attained.

### BRIEF DESCRIPTION OF DRAWING

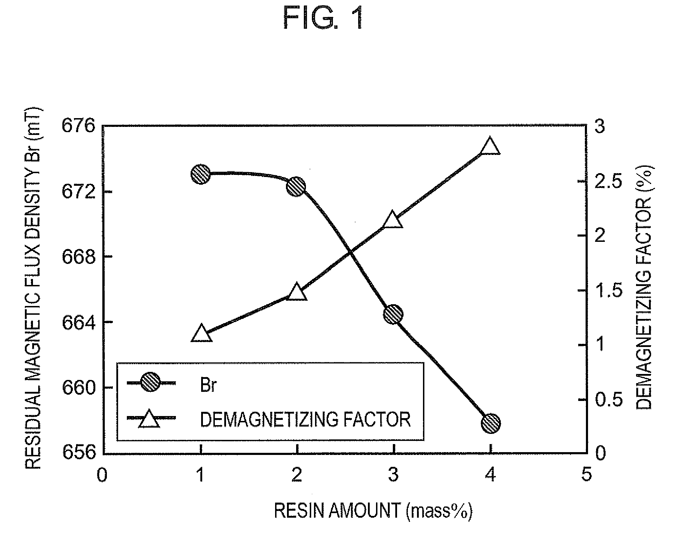

FIG. 1 illustrates a relationship between the residual magnetic flux density and the demagnetizing factor with respect to the resin amount of a bonded magnet in the present exemplary embodiment.

### DESCRIPTION OF EMBODIMENTS

Hereinafter, a bonded magnet rotor in an exemplary embodiment of the present invention and a motor provided with the same will be explained with reference to the drawing. It is to be noted that the present invention is not limited to the present exemplary embodiment.

### EXEMPLARY EMBODIMENT

Hereinafter, a bonded magnet in an exemplary embodiment of the present invention will be explained.

The bonded magnet of the present exemplary embodiment is obtained by mixing at least 98 mass% or more of a rare-earth magnetic powder and more than 0 mass% and 2 mass% or less of a binder and compression-molding the mixed composition to be formed into a shape such as a cylindrical shape. The rare-earth magnetic powder constituting the bonded magnet is made of, for example, a Nd-Fe-B-based simple substance, a Sm-Fe-N-based simple substance, a Sm-Co-based simple substance, or a mixture of these. Here, in order to prevent the rare-earth magnetic powder from oxidation, the rare-earth magnetic powder is surface-treated with a coupling agent such as ethyltrimethoxysilane, trimethoxysilane, methyldiethoxysilane, triethoxysilane, propyltrimethoxysilane, propyltrimethoxysilane, propyltriethoxysilane, trimethoxysilane, triethoxysilane, propylamine, and trimethoxysilane.

The binder constituting the bonded magnet contains at least a thermosetting resin such as an epoxy resin and a thermoplastic resin made of a polyamide resin or the like, which are blended in a predetermined ratio.

If the amount of the rare-earth magnetic powder is less than 98 mass%, magnetic characteristics of the bonded magnet are deteriorated. If the amount of the binder is more than 2 mass%, it is not preferred because the residual magnetic flux density (Br) of the bonded magnet is decreased, and heat resistance is deteriorated due to increase in demagnetizing factor.

According to the present exemplary embodiment, by making the bonded magnet in a predetermined mixing ratio, it is possible to attain a bonded magnet having high magnetic characteristics such as high maximum energy product ((BH)max), residual magnetic flux density (Br), and coercive force (Hcj) and having excellent heat resistance with a small increase in demagnetizing factor at high temperatures.

The above bonded magnet is compression-molded into a predetermined shape such as a cylindrical shape to produce a rotor or stator and then make a motor therewith. Accordingly, it is possible to attain a motor having a small deterioration in characteristics even under a high temperature environment such as an engine room of an automobile.

Hereinafter, one example of a method of producing a bonded magnet and a motor in the exemplary embodiment of the present invention will be explained.

First, a rare-earth magnetic powder which has been surface-treated with a coupling agent and occupies 98 mass% or more of the total content is kneaded with a resin solution composed of a solvent such as acetone and a thermosetting resin such as an epoxy resin constituting at least one component of a binder to produce a mixture. Then, the mixture is dried at a temperature at which the solvent acetone evaporates.

Next, a thermoplastic resin such as a polyamide resin constituting the other component of the binder is mixed with the above mixture within a temperature range in which the thermoplastic resin does not melt. Then, a curing agent of the thermosetting resin, for example, an imidazole-based curing agent having a curing starting temperature of 170°C, is mixed therewith to produce a resin composition for a bonded magnet. At this time, the total amount of the thermosetting resin and the thermoplastic resin constituting the binder is more than 0 mass% and 2 mass% or less. It is to be noted that, as long as the total content of the binder is within the above range, the ratio between the content of the thermosetting resin and the content of the thermoplastic resin can be any combination in accordance with desired characteristics.

Next, the resin composition for a bonded magnet described above is heated to a temperature at which the thermosetting resin and the thermoplastic resin constituting the binder melt, and compression-molded into a desired shape such as a cylindrical shape, a column shape, or a disk shape by using, for example, a metal mold, to produce a green body.

Then, the produced green body is heated and cured by heat to form a bonded magnet.

Next, the bonded magnet produced by the above method is formed into a shape of a rotor or stator, and a motor provided with the rotor and stator produces.

In the present exemplary embodiment, although an epoxy resin is used as an example of the thermosetting resin, the thermosetting resin is not limited thereto. For example, a resin such as a phenolic resin and an unsaturated polyester resin may be used.

In the present exemplary embodiment, although a polyamide resin is used as an example of the thermoplastic resin, the thermoplastic resin is not limited thereto. For example, a polyvinylidene chloride resin, a polyamideimide resin, or the like may be used.

In the present exemplary embodiment, although a rare-earth magnetic powder is used as an example of the magnetic powder, the magnetic powder is not limited thereto. For example, a magnetic powder such as ferrite may be used.

### EXAMPLES

Hereinafter, examples of the present invention will be explained. It is to be noted that the present invention is not limited to the following examples and can be carried out by modifying materials to be used etc., as long as the gist of the present invention is not altered.

### (Example 1)

First, 0.24 mass% of a novolak-based solid epoxy resin having a melting temperature of about 75°C and being solid at ordinary temperature was mixed with a solvent such as acetone to produce a resin solution.

Next, the mixed resin solution was wet-mixed with 99 mass% of a Nd-Fe-B-based rare-earth magnetic powder by using a mixing-kneading machine such as a kneader to produce a mixture.

Next, the solvent component in the produced mixture was dried at 80°C for 60 minutes and then coarsely ground with a grinder. After that, 0.75 mass% of a polyamide resin, which was a thermoplastic resin and had been ground into a powder form, was mixed with an internal lubricant by using a mixer or the like. The mixture was continuously charged into a gap between heat rollers which had been heated to 140°C, and kneaded for 10 minutes to produce a kneaded product.

Next, the above kneaded product was ground with a grinder again and sieved with a classifier to regulate the particle size.

Finally, 0.01 mass% of an imidazole-based curing agent having a curing starting temperature of 170°C was mixed therewith by using a mixer to produce a resin composition for a bonded magnet of Example 1.

### (Example 2)

A resin composition for a bonded magnet of Example 2 was produced in the same manner as in Embodiment 1, except that 0.48 mass% of the epoxy resin, 98 mass% of the Nd-Fe-B-based rare-earth magnetic powder, 1.5 mass% of the polyamide resin, and 0.02 mass% of the curing agent were used.

### (Example 3)

A resin composition for a bonded magnet of Example 3 was produced in the same manner as in Embodiment 1, except that 0.72 mass% of the epoxy resin, 97 mass% of the Nd-Fe-B-based rare-earth magnetic powder, 2.25 mass% of the polyamide resin, and 0.03 mass% of the curing agent were used.

### (Example 4)

A resin composition for a bonded magnet of Example 4 was produced in the same manner as in Embodiment 1, except that 0.96 mass% of the epoxy resin, 96 mass% of the Nd-Fe-B-based rare-earth magnetic powder, 3.0 mass% of the polyamide resin, and 0.04 mass% of the curing agent were used.

Accordingly, four types of bonded magnets of Examples 1 to 4 were produced, in which the resin amount was changed from one another. Table 1 shows the blending ratio of the resin compositions of the bonded magnets of Examples 1 to 4.

**[Table 1]**

| | Example 1 | Example 2 | Example 3 | Example 4 |
|---|---|---|---|---|
| Magnetic powder (mass%) | 99 | 98 | 97 | 96 |
| Epoxy resin (mass%) | 0.24 | 0.48 | 0.72 | 0.96 |
| Polyamide resin (mass%) | 0.75 | 1.5 | 2.25 | 3 |
| Curing agent (mass%) | 0.01 | 0.02 | 0.03 | 0.04 |

### (Evaluation of magnetic characteristics)

First, in order to evaluate magnetic characteristics of the resin compositions of the bonded magnets produced in Examples 1 to 4, these were each compression-molded at a temperature of 170°C to produce a bonded magnet composed of a column test piece of Φ 5 mm × 5 mm.

Then, the residual magnetization (residual magnetic flux density: Br), the coercive force (Hcj), and the maximum energy product ((BH)max) were evaluated by using a vibrating sample magnetometer manufactured by Riken Denshi Co., Ltd.

### (Evaluation of heat resistance)

First, in order to evaluate heat resistance of the resin compositions of the bonded magnets produced in Examples 1 to 4, these were each compression-molded at a temperature of 170°C to produce a bonded magnet composed of a column test piece of Φ 5 mm × 3.5 mm.

Then, the change rate of flux (magnetic flux) of the bonded magnet after being left at 150°C for 300 hours was calculated by using a flux meter manufactured by Denshijiki Industry Co., Ltd. to evaluate heat resistance of the bonded magnet.

Table 2 shows evaluation results of magnetic characteristics and heat resistance of four types of bonded magnets of Examples 1 to 4, in which the resin amount is different from one another. It is to be noted that the resin amount in Table 2 indicates the sum of the epoxy resin, the polyamide resin, and the curing agent.

**[Table 2]**

| | Example 1 | Example 2 | Example 3 | Example 4 |
|---|---|---|---|---|
| Resin amount (mass%) | 1 | 2 | 3 | 4 |
| Density (Mg/m³) | 5.85 | 5.84 | 5.80 | 5.75 |
| (BH)max (kj/m³) | 73.3 | 73.2 | 71.4 | 69.2 |
| Br (mT) | 673 | 672 | 665 | 658 |
| Hcj (kA/m) | 947 | 943 | 938 | 935 |
| Demagnetizing factor at 150°C after 300 h (%) | 1.1 | 1.5 | 2.15 | 2.83 |

Fig. 1 illustrates change in residual magnetic flux density (Br) and change in demagnetizing factor at 150°C after 300 hours with respect to the resin amount.

Table 2 and Fig. 1 show that, when Examples 1 and 2 are compared with Examples 3 and 4, the bonded magnets having 98 mass% or more of the magnetic powder and a resin amount of more than 0 mass% and 2 mass% or less have excellent magnetic characteristics and heat resistance. The reason is assumed that a small amount of resin reduces the generation of gaps due to expansion of the resin at a high temperature (150°C) in molding or the like, and therefore prevents entry of oxygen into the bonded magnet and suppresses demagnetization resulting from oxidation degradation (degradation of magnetic characteristics).

That is, by making a bonded magnet having 98 mass% or more of the magnetic powder and a resin amount of more than 0 mass% and 2 mass% or less, a bonded magnet having excellent magnetic characteristics and heat resistance can be attained.

Also, by using a bonded magnet having 98 mass% or more of the magnetic powder and a resin amount of more than 0 mass% and 2 mass% or less to form a rotor or stator and then make a motor therewith, a motor having excellent magnetic characteristics and heat resistance can be attained.

### INDUSTRIAL APPLICABILITY

The bonded magnet of the present invention can be used under a high temperature environment. Therefore, it is useful in a technical field such as a motor used under a high temperature environment such as an engine room of an automobile.

## Claims

1. A bonded magnet comprising at least a magnetic powder and a binder, wherein the magnetic powder and the binder are mixed such that a content of the magnetic powder is 98 mass% or more and a content of the binder is more than 0 mass% and 2 mass% or less.

2. The bonded magnet according to claim 1, wherein the binder contains at least a thermosetting resin and a thermoplastic resin.

3. The bonded magnet according to claim 2, wherein the thermosetting resin is any of an epoxy resin, a phenolic resin, and an unsaturated polyester resin.

4. The bonded magnet according to claim 2, wherein the thermoplastic resin is any of a polyvinylidene chloride resin, a polyamide resin, and a polyamideimide resin.

5. A motor having a rotor or stator provided with the bonded magnet according to any one of claims 1 to 4.
